(19) Europäisches Patentamt
European Patent Office
Office européen des brevets

(11) Publication number: 0 248 526 A1

# (12) EUROPEAN PATENT APPLICATION

(21) Application number: 87303766.7

(22) Date of filing: 28.04.87

(51) Int. Cl.4: C08L 77/00 , C08L 71/04 , C08K 5/37

(30) Priority: 02.05.86 JP 102867/86
20.05.86 JP 115620/86

(43) Date of publication of application:
09.12.87 Bulletin 87/50

(84) Designated Contracting States:
DE FR GB IT NL

(71) Applicant: MITSUBISHI PETROCHEMICAL CO., LTD.
5-2, 2-chome, Marunouchi
Chiyoda-ku Tokyo 100(JP)

(72) Inventor: Shibuya, Nobuhiro
c/o Mitsubishi Petrochemical Co., Ltd. 1, Toho-cho
Yokkaichi-shi Mie(JP)
Inventor: Kosegaki, Kimiho
c/o Mitsubishi Petrochemical Co., Ltd. 1, Toho-cho
Yokkaichi-shi Mie(JP)

(74) Representative: Diamond, Bryan Clive et al
Gee & Co. Chancery House Chancery Lane
London WC2A 1QU(GB)

## (54) Resin composition containing a polyamide and a polyphenylene ether.

(57) A blend is made of, by weight (a) 10-70 parts of a polyphenylene ether which may have various substituents on the phenyl nucleus, and has at least 50 recurring units, (b) 30-90 parts of a polyamide (a nylon) and optionally (c) 3-50% of a rubbery polymer which is elastic at room temperature (e.g. a copolymer of an aromatic vinyl compound and a conjugated diene); and as a stabilizer, a thioether compound (preferably of formula $R^0$-S-$CHR^1R^2$, where the Rs are hydrocarbon or substituted hydrocarbon groups of 1-35 C atoms and $R^1$ and $R^2$ can be H; 28 specific compounds are shown.

Optional further ingredients are 0.01-5 parts of sterically hindered phenol compound; and 0.01 to 30 parts of a compound containing a -C=C-or -C≡C-bond and a polar group (e.g. carboxyl group), per 100 parts of (a), (b) and (c).

The blending can be at 200-380°C, and the melt is extruded and pelletised.

The resultant resin composition can be molded into products of large size, e.g. for automobile parts, and is highly resistant to solvents.

EP 0 248 526 A1

## RESIN COMPOSITION CONTAINING A POLYAMIDE AND A POLYPHENYLENE ETHER

The present invention relates to a resin composition which is excellent in its balance of mechanical strengths, resistance to oil, moldability and coatability. More particularly, it relates to a resin composition which is excellent in the balance of impact strength and other mechanical strengths, thermal rigidity and resistance to organic solvents, as well as in stability upon molding at elevated temperatures, and is suited for injection, extrusion and blow moldings.

Recently, much attention has been paid to polyphenylene ether resins because of their usefulness as an engineering resin based on their excellent mechanical and thermal properties. However, polyphenylene ether resins, when used alone, have extremely poor resistance to solvents. In order to rectify this disadvantage, it has been proposed to blend the resin with polyamide-series resins (see U.S. Patent 4,338,421), polyester-series resins (see Japanese Patent Publications Nos. 21662/76, 21663/76 and 21664/76). Although the solvent resistance of polyphenylene ether resins can be improved by such blendings, the blended polymer resins have only insufficient mechanical properties, in particular, impact strength and hence are unable to satisfy the requirements on practicability in the field of industry. It is also known to blend polyphenylene ethers and high impact polystyrenes, so as to obtain a blended polymer having improved properties in both moldability and impact strength. Such a blended polymer is already in actual use, but can be used only in limited areas because of its extremely poor resistance to solvents.

For the purpose of improving the impact strength of resin compositions consisting of polyphenylene ether resins and polyamide-series resins, it has been proposed to incorporate therein liquid polybutadiene-series polymers (see U.S. Patent 4,315,086), or rubbers and compounds containing carboxyl, imido and epoxy groups, etc. (see Japanese Laid Open Patent Application No. 49753/81).

The inventors have previously proposed a resin composition having excellent mechanical strength, which comprises a polyphenylene ether resin, a polyamide resin, a block copolymer of aromatic vinyl compounds and conjugated dienes, and a compound containing both carbon-carbon double bonds and polar groups that exhibit affinity to polyamides.

Although these resin compositions are capable of meeting relatively high levels of requirements in the field of industry, their properties are not always satisfactory with regard to higher levels of requirements for the sta bility during molding required on various uses in the market. There is, therefore, still room for further improvement.

An object of the present invention is to provide a resin composition which comprises a polyphenylene ether resin and a polyamide resin and is excellent in mechanical strength and resistance to solvents, as well as in stability upon melt-molding at elevated temperatures.

It has now been found that a resin composition comprising a polyphenylene ether resin, a polyamide resin and a thioether compound, or a resin composition comprising a polyphenylene ether resin, a polyamide resin, a thioether compound and a highly sterically hindered phenol compound exhibits excellent molding stability (or heat stability during molding) and excellent mechanical strength. The present invention has been accomplished based on this finding.

Accordingly, there is provided by the present invention a resin composition which comprises:

Component (I): Resin (D) consisting of polyphenylene ether resin (a), polyamide resin (b) and, optionally, rubber-like polymer (c), and

Component (2): Thioether compound (E) the component (2) being contained in the resin composition in an amount of from 0.01 to 5 parts by weight, per 100 parts by weight of the component (I): the resin (D).

In a preferred embodiment, the composition also includes as a further optional component:

Component (3): a highly sterically hindered phenol compound (F), the components (2) and (3) each being contained in the resin composition in an amount of from 0.01 to 5 parts by weight, per 100 parts by weight of the component (I): the resin (D).

There can be obtained by the present invention a resin composition having excellent stability upon molding, in comparison with prior resin compositions containing polyphenylene ether resins and polyamide resins.

The present invention will further be explained hereinbelow.

(Ingredients for the Composition)

(I) Polyphenylene Ether Resin (a)

Polyphenylene ether resins (a) to be used in the present invention are those containing the recurring units represented by the following general formula (I):

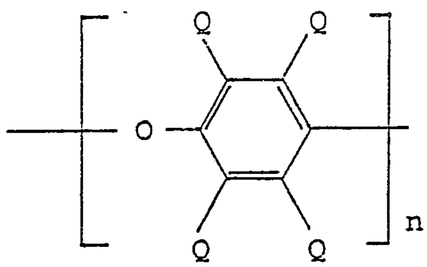

(I)

wherein the free bond from the ether oxygen atom in one recurring unit is directly linked to the free bond from the phenyl nucleus in another recurring unit, n represents an integer of at least 50, and Q each independently represents a monovalent substituent selected from a hydrogen atom, a halogen atom, a hydrocarbon group containing no tertiary α-carbon atoms, a halogenated hydrocarbon group having at least two carbon atoms between the phenyl nucleus and the halogen atom, a hydrocarbon-oxy group, and a halogenated hydrocarbon-oxy group having at least two carbon atoms between the phenyl nucleus and the halogen atom.

As typical examples of polyphenylene ether resins (a) to be used in the present invention, mention may be made of poly(2,6-dimethyl-l,4-phenylene) ether, poly(2,6-diethyl-l,4-phenylene) ether, poly(2-methyl-6-ethyl-l,4-phenylene) ether, poly(2-methyl-6-propyl-l,4-phenylene) ether, poly(2,6-dipropyl-l,4-phenylene) ether, poly(2-ethyl-6-propyl-l,4-phenylene) ether, poly(2,6-dibutyl-l,4-phenylene) ether, poly(2,6-dipropenyl-l,4-phenylene) ether, poly(2,6-dilauryl-l,4-phenylene) ether, poly(2,6-diphenyl-l,4-phenylene) ether, poly(2,6-dimethoxy-l,4-phenylene) ether, poly(2,6-diethoxy-l,4-phenylene) ether, poly(2-methoxy-6-ethoxy-l,4-phenylene) ether, poly(2-ethyl-6-stearyloxy-l,4-phenylene) ether, poly(2,6-dichloro-l,4-phenylene) ether, poly-(2-methyl-6-phenyl-l,4-phenylene) ether, poly(2,6-dibenzyl-l,4-phenylene) ether, poly(2-ethoxy-l,4-phenylene) ether, poly(2-chloro-l,4-phenylene) ether and poly(2,5-dibromo-l,4-phenylene) ether.

It is also possible to use copolymers of 2,6-dimethylphenol and 2,3,6-trimethylphenol, copolymers of 2,6-dimethylphenyl and 2,3,5,6-tetramethylphenol, and copolymers of 2,6-diethylphenol and 2,3,6-trimethylphenol.

Other examples of polyphenylene ether resins (a) to be used in the present invention include modified polyphenylene ethers, including those prepared by grafting styrene-series monomers (e.g., styrene, p-methylstyrene, α-methylstyrene,) into polyphenylene ethers defined by the above-described general formula (I), etc.

The above polyphenylene ether resins (a) can be produced by any known methods, including those described, for example, in U.S. Patents 3,306,874, 3,306,875, 3,257,357, 3,257,358, 4,0ll,200 and 3,929,930.

Polyphenylene ether resins (a) preferable for the purposes of the present invention are those having alkyl substituents at the two ortho positions of the ether oxygen atom, and copolymers of 2,6-dialkylphenols and 2,3,6-trialkylphenols.

(2) Polyamide Resin (b)

In the present invention, there can be used polyamide resins which have

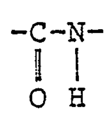

bond in the main chain and which can be melted by heating. As typical examples of such polyamide resins (b), mention may be made of nylon-4, nylon-6, nylon-6,6, nylon-4,6, nylon-l2, nylon-6,l0, and the like. Other

known transparent nylons can be used, as well.

Examples of particularly preferable polyamide resins (b) include nylon-6,6 and nylon-6. It is possible to use polyamide resins available commercailly. As an example of commercially available polyamide resin which can be employed in the present invention, mention may be made of Ultramid (trade name, of BASF A.G. of West Germany).

(3) Rubber-like Polymer (c)

The resin (D) in the present invention can include a rubber-like polymer (c).

Rubber-like polymer (c) to be used in the present invention can be a synthetic or natural polymeric materials which is elastic at room temperature. As specific examples of rubber-like polymers (c) usable in the present invention, mention may be made of polymers of diene series, such as natural rubbers, butadiene polymers, isoprene polymers, chlorobutadiene polymers and butadiene-acrylonitrile copolymers; copolymers of aromatic vinyl compounds and conjugated dienes, such as butadiene-styrene copolymers, isoprene-styrene copolymers and butadiene-styrene-acrylonitrile copolymers (these copolymers can be of any type, including random copolymers, linear block-copolymers, branched block copolymers (e.g., radial teleblocks, etc.) and graft copolymers); polymers prepared by hydrogenating, at least partially, the above-mentioned copolymers of aromatic vinyl compounds and conjugated dienes; isobutylene polymers; isobutylene-isoprene copolymers; isobutylene-butadiene copolymers; ethylene-α-olefin copolymers; ethylene-α-olefin-diene copolymers; graft copolymers prepared from (i) an aromatic vinyl compound (e.g., styrene, etc.) or a mixture of monomers mainly comprising aromatic vinyl compounds and (ii) a polymer of diene series, such as butadiene polymers, isoprene polymers, natural rubbers and the like, or a copolymer, such as isobutylene-diene series copolymers, ethylene-α-olefin series copolymers and ethylene-α-olefin-diene series copolymers; thiokols; polysulfide rubbers; polyurethane rubbers; polyether rubbers (for example, polypropylene oxides); and epichlorohydrin rubbers.

Of these rubber-like polymers (c), those selected from copolymers of aromatic vinyl compounds and conjugated dienes and polymers prepared by hydrogenating, at least partially, the above-mentioned copolymers of aromatic vinyl compounds and conjugated dienes can be preferable. Copolymer of aromatic vinyl compounds and conjugated dienes can be particularly preferable.

These rubber-like polymers (c) can be produced by any process (including, e.g., emulsion polymerization and solution polymerization) by use of any kind of catalysts (including, e.g., peroxides, trialkyl aluminums, alkyl lithium, lithium halides, nickel catalysts, etc.). The polymers can be bridged to various extents, and may have various microstructures (e.g., cis-structures, vinyl groups, l,2-bonds, l,4-bonds, etc.). They can be particles having an average particle size varying over a wide range.

Examples of above-mentioned copolymers of aromatic vinyl compounds and conjugated dienes available on the market include styrene-butadiene random copolymers (such as SBR, those usually used for tires, tubes, sheets, etc. of automobiles), styrene-butadiene block copolymers (such as Kraton-D and Kariflex, of Shell Chemical Co., TR2000 and TR2400, of Japan Synthetic Rubber Co., Ltd., and Tufprene, of Asahi Kasei Kogyo Kabushiki Kaisha).

(4) Thioether Compound (E)

Thioether compound (E) to be used in the present invention is a compound having at least one thioether bond in the molecule. It is preferable to use thioethers, at least one of the groups linked to the sulfur atom of which is an alkyl group or a substituted alkyl group (e.g., an alkyl group substituted with at least one functional group other than alkyl groups or hydrogen atoms).

As examples of usable thioether compounds (E), mentioned may be made of the following:

(l) $R^0\text{-S-}CHR^1R^2$

wherein $R^0$ represents a hydrocarbon group or a substituted hydrocarbon group, and $R^1$ and $R^2$ represent a hydrogen atom, a hydrocarbon group or a substituted hydrocarbon group, said hydrocarbon and substituted hydrocarbon groups containing l to 35 carbon atoms, preferably l to 26 carbon atoms. For example, those contain such structures as alkylthiopropionic acids, alkylthiobutyric acids, and esters thereof.

(2) $R^3SC_nH_{2n}COOR^4OOCC_nH_{2n}SR^3$,

(3) $R^3SC_nH_{2n}COOC_mH_{2m}SC_m H_{2m}SR^3$,

(4) $R^3C(CH_2OX)_3$,

(5) $XOCH_2C(OX)HCH_2OX$,

(6) $C(CH_2OX)_4$,

(7) $R^5OOCCH_2CH_2$-S-$CH_2CH_2COOR^5$, or

(8) 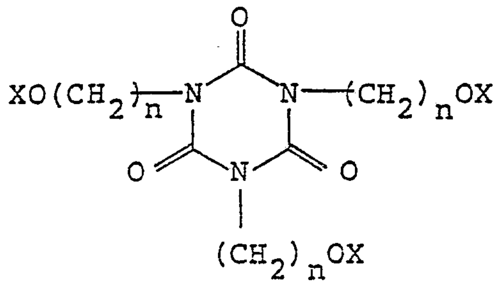

wherein $R^3$ represents an alkyl group having l to 30 carbon atoms, m and n each represents an integer of 2 or 3, $R^4$ represents an alkylene or cycloalkylene group containing 2 to l2 carbon atoms, $R^5$ represents an alkyl group or cycloalkylene group containing l to 30 carbon atoms, and X represents a $-COC_nH_{2n}SR^3$ group (wherein n and $R^3$ have the same significance as above) or a hydrogen atom, the $R^3$ and $R^5$ group may being the same or different and at least one of the X groups being $-COC_nH_{2n}SR^3$.

Specific examples of thioether compounds (E) usable in the present invention include the following:

$$(C_{12}H_{25}SC_2H_4\overset{\underset{\|}{O}}{C}OCH_2)_3C-CH_3 \qquad (E1)$$

$$(C_{12}H_{25}SC_2H_4\overset{\underset{\|}{O}}{C}OCH_2)_3C-C_2H_5 \qquad (E2)$$

$$(C_{18}H_{37}SC_2H_4\overset{\overset{O}{\|}}{C}OCH_2)_3\ C-C_2H_5 \qquad (E3)$$

$$(C_4H_9SC_2H_4\overset{\overset{O}{\|}}{C}OCH_2)_4\,C \qquad (E4)$$

$$(C_{12}H_{25}SC_2H_4\overset{\overset{O}{\|}}{C}OCH_2)_4\,C \qquad (E5)$$

$$(C_{22}H_{45}SC_2H_4COOCH_2)_4\,C \qquad (E6)$$

$$(C_{28}H_{57}SC_2H_4COOCH_2)_4\,C \qquad (E7)$$

$$(C_{12}H_{25}SCH_2\underset{\underset{CH_3}{|}}{C}HCOOCH_2)_4\,C \qquad (E8)$$

$$[(C_{12}H_{25}SC_2H_4COOCH_2)_3\,C-CH_2]_2\,O \qquad (E9)$$

$$(C_{12}H_{25}SC_2H_4COO)_6\text{sorbitol residue} \qquad (E10)$$

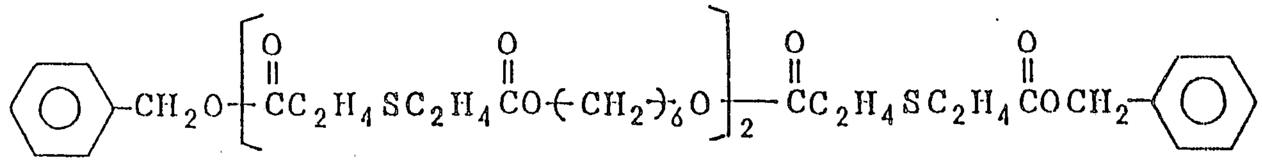

(E11)

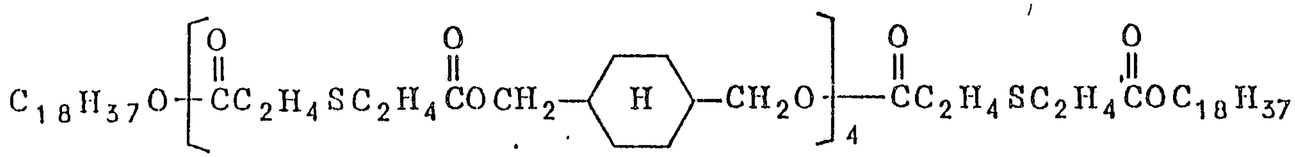

(E12)

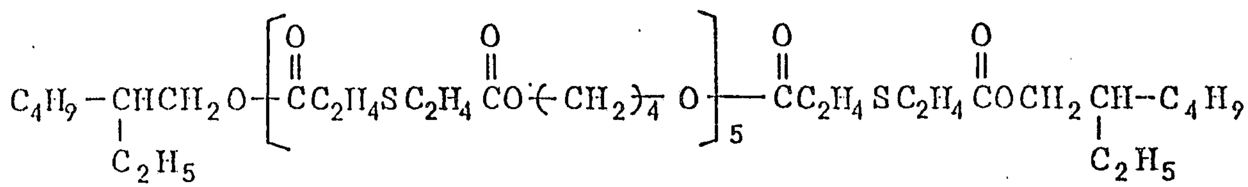

(E13)

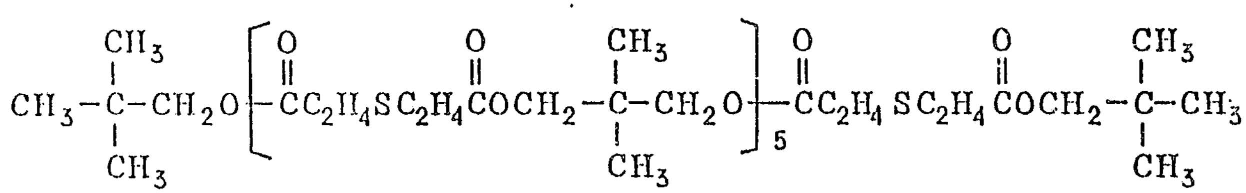

(E14)

$$C_{12}H_{25}O\overset{O}{\overset{\|}{C}}C_2H_4SC_2H_4\overset{O}{\overset{\|}{C}}OC_2H_4SC_2H_4O\overset{O}{\overset{\|}{C}}C_2H_4SC_2H_4\overset{O}{\overset{\|}{C}}OC_{12}H_{23} \qquad (E15)$$

$$C_4H_9O\left[\overset{O}{\overset{\|}{C}}C_2H_4SC_2H_4\overset{O}{\overset{\|}{C}}OC_2H_4O\right]_3\overset{O}{\overset{\|}{C}}C_2H_4SC_2H_4\overset{O}{\overset{\|}{C}}OC_4H_9 \qquad (E16)$$

$$C_{12}H_{25}O\left[\overset{O}{\overset{\|}{C}}C_2H_4SC_2H_4\overset{O}{\overset{\|}{C}}O(CH_2)_{10}O\right]_2\overset{O}{\overset{\|}{C}}C_2H_4SC_2H_4\overset{O}{\overset{\|}{C}}OC_{12}H_{23} \qquad (E17)$$

$$C_4H_9SC_2H_4\overset{O}{\overset{\|}{C}}O\left[(CH_2)_4O\overset{O}{\overset{\|}{C}}C_2H_4SC_2H_4\overset{O}{\overset{\|}{C}}O\right]_5(CH_2)_4O\overset{O}{\overset{\|}{C}}C_2H_4SC_4H_9 \qquad (E18)$$

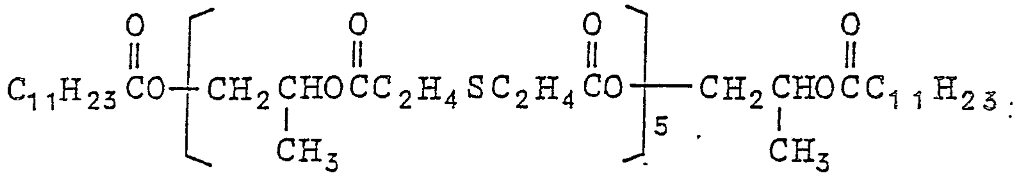
(E19)

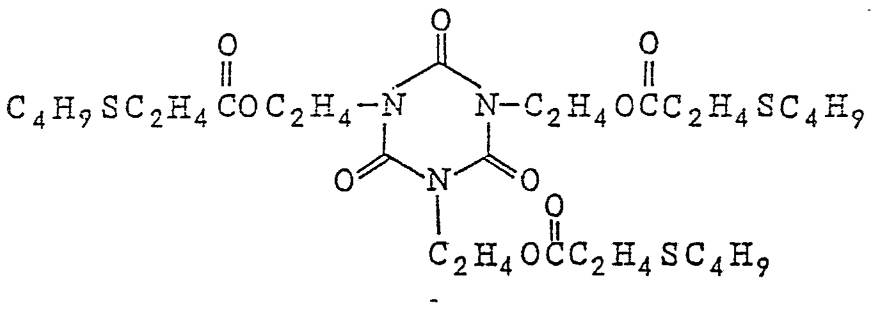
(E20)

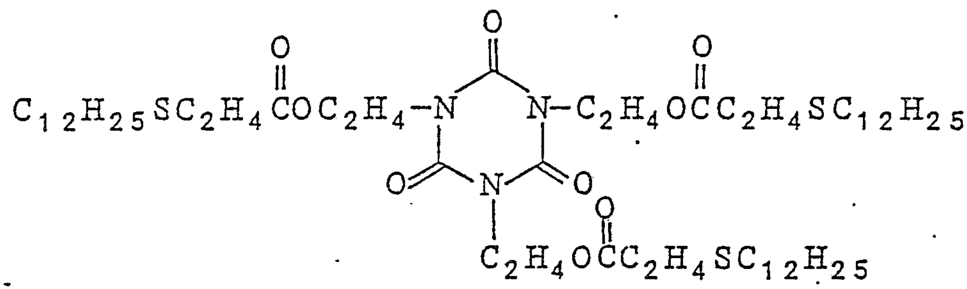
(E21)

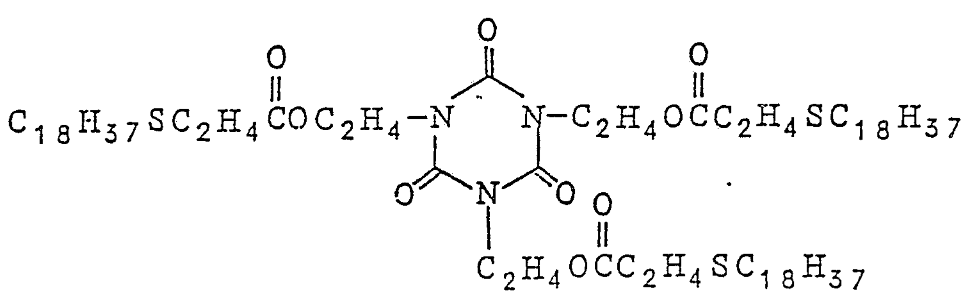
(E22)

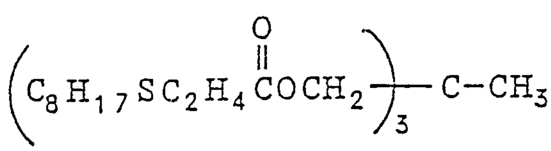
(E23)

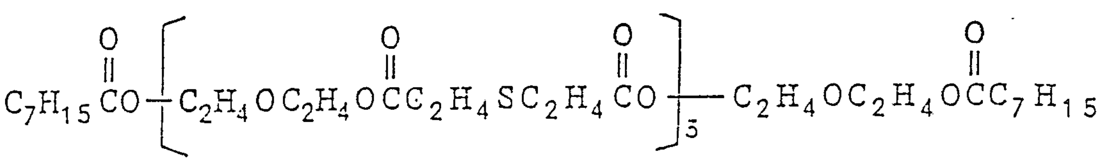
(E24)

$$CH_3\overset{\overset{O}{\|}}{C}O-\left[-(CH_2)_{10}-O\overset{\overset{O}{\|}}{C}C_2H_4SC_2H_4\overset{\overset{O}{\|}}{C}O-\right]_3-(CH_2)_{10}-O\overset{\overset{O}{\|}}{C}CH_3 \qquad (E25)$$

$$C_{12}H_{25}SC_2H_4\overset{\overset{O}{\|}}{C}O-\left[-(CH_2)_{10}-O\overset{\overset{O}{\|}}{C}C_2H_4SC_2H_4\overset{\overset{O}{\|}}{C}O-\right]_4-(CH_2)_{10}-O\overset{\overset{O}{\|}}{C}C_2H_4SC_{12}H_{25} \qquad (E26)$$

$$(C_{14}H_{29}-O-\overset{\overset{O}{\|}}{C}-CH_2CH_2)_2S \qquad (E27)$$

$$(C_{18}H_{37}O\overset{\overset{O}{\|}}{C}-CH_2CH_2)_2S \qquad (E28)$$

Of the above thioether compounds,(E5), (E27) and (E28) can be particularly preferable.

(5) Highly Sterically Hindered Phenol Compound (F)

The highly sterically hindered phenol compound (F) to be used in the present invention is a compound containing at least one phenol structure in the molecule and having, in the vicinity thereof, bulky functional groups that cause significant steric hindrance upon chemical reactions in which the phenolic hydroxyl group participates. More specifically, the highly sterically hindered phenol compound (F) can be represented by the following general formula (II):

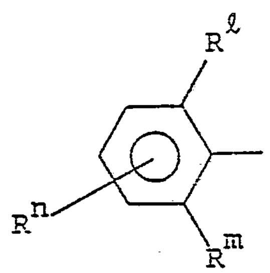

(II)

wherein $R^{\ell}$ represents a hydrocarbon group linked, through its tertiary carbon atom, to the aromatic ring and having from 4 to 30 carbon atoms; $R^m$ represents a hydrocarbon group having from 3 to 30 carbon atoms; and $R^n$ represents a group which is linked, through such an atom as carbon. oxygen. nitrogen, sulfur, phosphorus, etc., to the aromatic ring, for example, an alkyl group, an aryl group, an alicyclic group, an alkoxyl group, a carboxylic acid residue, a hydroxyl group, an ester residue, a-sulfide group, a sulfonyl group, an amino group, an imino group, an amide residue, a phosphide group, a phosphoric acid residue,

etc.; the number of the group $R^n$ being l, 2 or 3, and $R^\ell$, $R^m$ and $R^n$ may being a group containing a hydrocarbon structure, such as aliphatic, alicyclic and aromatic groups.

The hydrocarbon group $R^m$ contained in the general formula (II) is preferably a group containing a branched or a ring structure, and $R^\ell$ and $R^m$ may be a group containing in their structure such atoms as oxygen, nitrogen, sulfur phosphorus, etc., within a limit where the effects of the present invention are not severely impaired. As specific examples of $R^\ell$ and $R^m$, mention may be made of those selected from a t-butyl group, a t-amyl group, a benzyl group, a cumyl group, an α-phenylethyl group and a 2-cyclohexyl-2-propyl group. Examples of highly sterically hindered phenol compounds (F) usable in the present invention include the following:

(Fl) Tetrakis[methylene-3-(3,5-di-t-butyl-4-hydroxyphenyl)propionate]methane
(F2) Octadecyl 3-(3,5-di-t-butyl-4-hydroxyphenyl)propionate
(F3) N,N'-hexamethylenebis(3,5-di-t-butyl-4-hydroxy)hydrocinnamide
(F4) l,3,5-trimethyl-2,4,6-tris(3,5-di-t-butyl-4-hydroxybenzyl)benzene
(F5) 2,4-bis(octylthio)-6-(4-hydroxy-3,5-di-t-butylanilino)-l,3,5-triazine
(F6) 2,2-thio-diethylenebis[3-(3,5-di-t-butyl-4-hydroxyphenyl)propionate]
(F7) l,6-hexanediol-bis[3-(3,5-di-t-butyl-4-hydroxyphenyl)propionate]
(F8) 2,2'-methylenebis(4-methyl-6-t-butylphenol)
(F9) 2,2'-ethylidenebis(4,6-di-t-butylphenol)
(Fl0) Tris(3,5-di-t-butyl-4-hydroxyphenyl)isocyanurate
(Fll) l,3,5-tris{2-[3-(3,5-di-t-butyl-4-hydroxyphenyl)propionyloxy)ethyl}isocyanurate
(Fl2) 2,6-di-t-butyl-p-cresol

Of these highly sterically hindered phenol compounds, (Fl), (F2), (F5), (F8) and (Fl0) can be preferable. Compounds (Fl), (F5) and (F8), in particular, compound (F5) can be most preferable. These highly sterically hindered phenol compounds are available on the market as they are sold as antioxidants, and can be used in the form.

Using phenol compounds having a relatively low level of steric hindrance to the phenolic hydroxyl group, such as those having a structure corresponding to the general formula (II), but at least one of the substituents, $R^\ell$ and $R^m$, is a hydrogen atom, a methyl group, etc., would be disadvantageous since the resulting resin composition, the objective of the present invention, would have a poor stability against heat. It is not desirable to use phenol compounds containing hydrocarbon groups $R^\ell$ and $R^m$, in the general formula (II), having a relatively low chemical stability. Examples of such phenol compounds include those containing $R^\ell$ and $R^m$ that may form a triphenyl methane structure together with the phenol skeleton.

The resin composition can additionally incorporate a compound containing both an unsaturated carbon-carbon group and a polar group.

(6) Unsaturated Carbon-Carbon Group and Polar Group-Containing Compound (G)

Unsaturated carbon-carbon group and polar group-containing compound (G) usable in the present invention is a compound having in one single molecule both (h) an unsaturated carbon-carbon double or triple bond and (i) a polar group, namely, a functional group having an affinity, or showing a chemical reactivity, to amide bonds contained in the polyamide resin or to carboxyl or amino groups which are present at the terminals of the polyamide chains. As examples of functional groups included in group (i), mention may be made of a carboxyl group; a group derivable from a carboxylic acid, namely, a carboxyl group of which hydrogen atom(s) and/or hydroxyl group is substituted, for example, salts, esters, acid amides, acid anhydrides, imides, acid azides or acid halides; an oxazoline group; a nitrile group; an epoxy group; an amino group; a hydroxyl group; an isocyanate group; and the like. Examples of usable unsaturated carbon-carbon group and polar group-containing compound (G), which contains both functional group (h) and functional group (i), include unsaturated carboxylic acids and derivatives thereof, unsaturated epoxy compounds, unsaturated alcohols, unsaturated amines and unsaturated isocyanic acid esters.

Specific examples of unsaturated carbon-carbon group and polar group-containing compound (G) include maleic anhydride; maleic acid; fumaric acid; maleimide; maleic acid hydrazide; reaction products of maleic anhydride and di amines, such as those having the structures represented by the following general formula (III) or (IV):

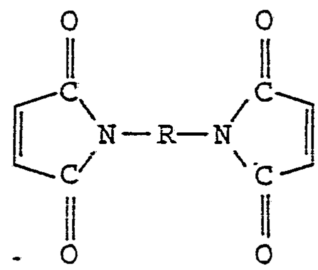

(III)

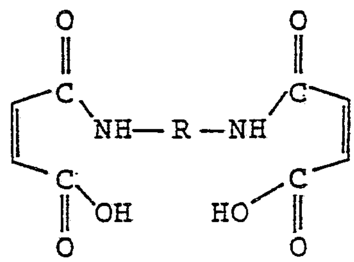

(IV)

(wherein R represents an aliphatic group or an aromatic group); methyl nadic anhydride; dichloromaleic anhydride; maleic amide; itaconic acid; itaconic anhydride; natural fats and oils, such as soybean oil, tung oil, castor oil, linseed oil, hempseed oil, cotton seed oil, sesame oil, rapeseed oil, peanut oil, tsubaki oil, olive oil, coconut oil, sardine oil, etc.; epoxydated natural fats and oils, such as epoxydated soybean oil, etc; unsaturated carboxylic acids, such as acrylic acid, butenoic acid, crotonic acid, vinylacetatic acid, methacrylic acid, pentenoic acid, angelic acid, tiglic acid, 2-pentenoic acid, 3-pentenoic acid, α-ethylacrylic acid, β-methylcrotonic acid, 4-pentenoic acid, 2-hexenoic acid, 2-methyl-2-pentenoic acid, 3-methyl-2-pentenoic acid, α-ethylcrotonic acid, 2,2-dimethyl-3-butenoic acid, 2-heptenoic acid, 2-octenoic acid, 4-decenoic acid, 9-undecenoic acid, l0-undecenoic acid, 4-dodecenoic acid, 5-dodecenoic acid, 4-tetradecenoic acid, 9-tetradecenoic acid, 9-hexadecenoic acid, 2-octadecenoic acid, 9-octadecenoic acid, eicosenoic acid, docosenoic acid, erucic acid, tetracosenoic acid, mycolipenoic acid, 2,4-pentadienoic acid, 2,4-hexadienoic acid, diallylacetic acid, geranic acid, 2,4-decadienoic acid, 2,4-dodecadienoic acid, 9,l2-hexadecadienoic acid, 9,l2-octadecadienoic acid, hexadecatrienoic acid, linolic acid, linoleic acid, octadecatrienoic acid, eicosadienoic acid, eicosatrienoic acid, eicosatetraeoic acid, ricinoleic acid, eleostearic acid, oleic acid, eicosapentaenoic acid, erucinic acid, docosadienoic acid, docosatrienoic acid, docosatetraenoic acid, docosapentaenoic acid, tetracosenoic acid, hexacosenoic acid, hexacodienoic acid, octacosenoic acid, tetracontenoic acid, etc., or esters, acid amides and anhydrides of these unsaturated carboxylic acids; unsaturated alcohols, such as allyl alcohol, crotyl alcohol, methyl vinylcarbinol, allylcarbinol, methylpropenylcarbinol, 4-penten-l-ol, l0-undecen-l-ol, propargyl alco hol, l,4-pentadien-3-ol, l,4-hexadien-3-ol, 3,5-hexadien-2-ol, 2,4-hexadien-l-ol, alcohols represented by the general formula $C_nH_{2n-5}OH$, $C_nH_{2n-7}OH$ or $C_n H_{2n-9}OH$ (wherein n represents a positive integer), 3-buten-l,2-diol, 2,5-dimethyl-3-hexen-2,5-diol, l,5-hexadien-3,4-diol, 2,6-octadien-4,5-diol, etc.; unsaturated amines, such as those obtainable by substituting the OH group of the above unsaturated alcohols with an $-NH_2$ group; polymeric compounds of butadiene, isoprene, etc. of a low polymerization degree (for example, an average molecular weight of ca. 500 to l0,000), or of a high polymerization degree (for example, an average molecular weight at least l0,000) which are added with maleic anhydride, phenols, etc. or introduced with amino groups, carboxyl groups, hydroxyl groups, epoxy groups, etc.; and allyl isocyanate.

As used herein, the definition of the unsaturated carbon-carbon group and polar group-containing compound (G) of the present invention includes those containing two or more functional groups (h) which may be the same or different and two or more functional groups (i) which may be the same or different. It is also possible to use more than two kinds of unsaturated carbon-carbon group and polar group-containing compounds (G). Of the above unsaturated carbon-carbon group and polar group containing compounds (G), maleic anhydride and maleic acid can be particularly preferable.

Compositional Ratio of the Components

By the use of thioether compound (E), there can be obtained a resin composition having an excellent processing or molding stability at high temperatures, irrespective of the ratio of polyphenylene ether resin (a) and polyamide resin (b) or of the ratio of polyphenylene ether resin (a), polyamide resin (b) and unsaturated carbon-carbon group and polar group-containing compound (G). It is however preferable, from the viewpoint of heat-resistant rigidity and resistance to organic solvents, that polyphenylene ether resin (a) is contained in the component (I): the resin (D) in an amount of from I0 to 70 parts by weight, more preferably from 30 to 60 parts by weight, per I00 parts by weight of the total of polyphenylene ether resin (a) and polyamide resin (b), and that polyamide resin (b) is contained in the component (I): the resin (D) in an amount of from 30 to 90 parts by weight, more preferably from 40 to 70 parts by weight, per I00 parts by weight of the total of polyphenylene ether resin (a) and polyamide resin (b). When the ratio of polyamide resin (b) is less than 30 parts by weight, there will result a resin composition having an inferior resistance to organic solvents. When it is more than 90 parts by weight, there will result a resin composition having an inferior heat-resistant rigidity.

The resin composition of the present invention can incorporate a rubber-like polymer (c) in order to improve its impact strength. The content of rubber-like polymer (c) is preferably from 3 to 50% by weight, more preferably from 5 to 35% by weight, most preferably from 5 to 20% by weight, based on the total weight of the component (I): the resin (D) consisting of polyphenylene ether resin (a), polyamide resin (b) and rubber-like polymer (c). When the amount of rubber-like polymer (c) is less than 3% by weight, the impact strength of the resulting resin composition can be improved only insufficiently, and when it is more than 50% by weight, the resulting resin composition will have a lowered level of rigidity.

Thioether compound (E) is contained in the resin composition preferably in an amount of from 0.0I to 5 parts by weight, more preferably from 0.05 to 3 parts by weight, most preferably from 0.I to 2 parts by weight, per I00 parts by weight of the component (I): The resin (D), namely, per I00 parts by weight of the total of polyphenylene ether resin (a) and polyamide resin (b) or, in the case where rubber-like polymer (c) is contained, per I00 parts by weight of the total of polyphenylene ether resin (a), polyamide resin (b) and rubber-like polymer (c). When the amount of the thioether compound (E) is less than 0.0I part by weight, sufficient effects could hardly be attained. When it is more than 5 parts by weight, it may bleed out on the surface of the molded product, and a deterioration of the mechanical property may be resulted.

As mentioned hereinbefore, the resin composition of the present invention can additionally incorporate a highly sterically hindered phenol compound (F), in combination with thioether compound (E). Highly sterically hindered phenol compound (F) is preferably contained in the resin composition in an amount of from 0.0I to 5 parts by weight, more preferably from 0.05 to 3 parts by weight, most preferably from 0.I to 2 parts by weight, per I00 parts by weight of the component (I): the resin (D), namely, per I00 parts by weight of the total of polyphenylene ether resin (a) and polyamide resin (b) or, in the case where rubber-like polymer (c) is contained, per I00 parts by weight of total of polyphenylene ether resin (a), polyamide resin (b) and rubber-like polymer (c). When the amount of highly sterically hindered phenol compound (F) is less than 0.0I part by weight, no substantial effects will be attained, and if the amount is more than 5 parts by weight, the mechanical properties of the resulting resin composition may be undesirably deteriorated and the compound may bleed out on the surface of molded products.

The total amount of thioether compound (E) and highly sterically hindered phenol compound (F) is preferably up to ca. 5 parts by weight, per I00 parts by weight of component (I): the resin (D), namely, per I00 parts by weight of the total of polyphenylene ether resin (a) and polyamide resin (b) or, in the case where rubber-like polymer (c) is contained, per I00 parts by weight of the total of polyphenylene ether resin (a), polyamide resin (b) and rubber-like polymer (c). When the total amount of thioether compound (E) as antioxidant and highly sterically hindered phenol compound (F) is greater than the upper limit, the mechanical properties of the resulting resin composition may be deteriorated and thioether compound (E) and phenol compound (F) may bleed out on the surface of molded products.

In the case where a higher level of impact strength and other mechanical properties are required, it is preferable to additionally incorporate unsaturated carbon-carbon group and polar group-containing compound (G) into the resin composition consisting of polyphenylene ether resin (a), polyamide resin (b) and thioether compound (E), or the resin composition consisting of polyphenylene ether resin (a), polyamide resin (b), thioether compound (E) and highly sterically hindered phenol compound (F). The polar group-containing unsaturated compound (G) is preferably used in an amount of from 0.0I to 30 parts by weight, more preferably from 0.05 to I5 parts by weight, most preferably from 0.I to 3 parts by weight, per I00 parts by weight of the component (I): the resin (D), namely, per I00 parts by weight of the total of polyphenylene ether resin (a) and polyamide resin (b) or, in the case where rubber-like polymer (c) is contained, per I00

parts by weight of the total of polyphenylene ether resin (a), polyamide resin (b) and rubber-like polymer (c). When it is contained more than the above upper limit, the resulting resin composition will suffer from deterioration in rigidity, and the appearance of the molded product tends to be deteriorated by the bleeding out of the ingredient. When it is contained in an amount less than 0.0l part by weight, the impact strength of the resulting resin composition can be improved only insufficiently.

If desired, the resin composition according to the present invention can additionally incorporate auxiliary ingredients, such as thermoplastic and thermosetting resins other than the polyphenylene ether resins and polyamide resins described hereinabove; antioxidants other than thioether compounds and highly sterically hindered phenol compounds described hereinabove, for example, organic phosphites, organic phosphonites, aromatic amines, etc.; weathering improvers; nucleating agents; slip agents; organic and inorganic fillers; reinforcing materials; flame retarders; coloring agents; antistatic agents; mold releasing agents; and the like. In particular, the incorporation of fillers, such as glass fibers, mica, talc, wollastonite and calcium carbonate, can be particularly effective for the improvement in the balance of rigidity and other physical properties, as well as in the improvement of moldability, dimensional precision and dimensional stability.

Blending Method

In the blending for producing the resin composition according to the present invention, there can be used any blending method generally employed for the blending, e.g., of resins; of resins, stabilizers and coloring agents; or of resins and fillers. For example, Henschel mixers, super mixers, ribbon blenders, V blenders, etc. can be used to give a mixture in which powdery or granular ingredients are uniformly dispersed. Thereafter, there can be used melt kneaders, such as biaxial blend extruders, monoaxial blend extruders, rolls, Banbury mixers, blast mills or a Brabender Plastograph. The melt blending is usually carried out at a temperature of 200 to 380°C. The thus obtained resin composition can be shaped into pellets by means of extrusion after being melt kneaded.

In the above mixing and kneading, rubber-like polymer (c) and unsaturated carbon-carbon group and polar group-containing compound (G) can be used, e.g., in one of the following manners: rubber-like polymer (c) and unsaturated carbon-carbon group and polar group-containing compound (G) are premixed at ordinary temperature; a solution of unsaturated carbon-carbon group and polar group containing compound (G) dissolved in a volatile organic solution, such as acetone, alcohols, heptane, xylene, ethers, benzene, etc., is precoated on rubber-like polymer (c); or unsaturated carbon-carbon group and polar group containing compound (G) is premixed with or grafted onto rubber-like polymer (c) by means of melt kneading, modification in an organic solvent, or the like, if necessary, in the presence of peroxides, etc., and with the application of heat.

Application of the Resin Composition of the Invention

The resin composition according to the present invention can be readily shaped by any molding methods generally applied to thermoplastic resins, including injection, extrusion, blow molding, etc. Of these molding methods, injection molding can be particularly preferable. Since the resin composition of the present invention have excellent mechanical properties, they can be suited for automobile parts, including exteriors, such as bumpers, door panels, fenders, moles, emblems, wheel covers, engine hoods, roofs, spoilers, etc., and interiors, such as instrument panels, console boxes, trims, etc.; exterior parts for electric appliances and apparatus, such as television sets and refrigerators; so-called office automation equipment; and the like.

The present invention will now be illustrated in greater detail with reference to the following examples and comparative examples, but it should be understood that they are not intended to limit the present invention.

In the examples and comparative examples, physical properties and other characteristics were measured and evaluated under the following conditions:

(I) Evaluation of Molding Stability of Resin Composition

Upon injection molding, resin compositions (in the form of pellets) were melted in the cylinder of a molding machine and allowed to reside therein. They were then injected into metal molds to give test samples for the determination of physical properties and for the observation of appearance.

The temperature of the cylinder and the residence time of the resin composition in cylinder were shown in the tables.

(2) Izod Impact Test

Impact strength (notched) of the test samples were determined in accordance with ISO Rl80-l969 (JIS K 7ll0) by use of Izod Impact Test Manufactured by Toyo Seiki Seisakusho Co., Ltd.

(3) Appearance

Unevenness of flow (such as flow marks), silver streaks, etc. were visually observed. Those showing a uniform surface were rated "A" (good), those showing unevenness in flow and silver streaks were rated as "B" (slightly poor), and those showing considerable unevenness in flow and silver streaks were rated as "C" (poor).

EXAMPLES I TO I5 AND COMPARATIVE EXAMPLES I TO 6

Prescribed amounts of the ingredients shown in the tables set forth below were thoroughly admixed by using a supermixer and melt-kneaded at a temperature of 280°C by using a PCM biaxial extruder manufactured by Ikegami Seisakusho Co., Ltd. to form a composition, which was extruded into a strand and then cut into pellets by a cutter.

The resulting pellets were injection-molded using an in-line screw injector (Model IS-90B manufactured by Toshiba Kikai Seisakusho Co.) to prepare test samples, wherein the cooling temperature of the metal molds was 80°C and the temperature of the cylinder was maintained at temperatures set forth in the tables. The compositions used for the injection were vacuum dried for 48 hours at a pressure of 0.l mmHg and at a temperature of 80°C just prior to the injection.

The components used in these examples and comparative examples are as follows.

I) Polyphenylene Ether Resin (a)

Poly(2,6-dimethyl-l,4-phenylene) ether having an intrinsic viscosity of 0.47 dl/g (in chloroform at 25°C) was used.

2) Polyamide Resin (b)

Nylon-6,6 [Ultramid (trade name) of BASF A.G. of West Germany] was used.

3) Rubber-like Polymer (c)

Pellets of Kraton-D (trade name) of Shell Chemical Co. were used. The results obtained are shown in Tables I, 2 and 3.

Table 1

| Items | Unit | Example 1 | Example 2 | Example 3 | Example 4 | Example 5 | Example 6 |
|---|---|---|---|---|---|---|---|
| Polyphenylene Ether Resin (a) | Parts by Weight | 50 | 50 | 50 | 50 | 43 | 43 |
| Polyamide Resin (b) | Parts by Weight | 50 | 50 | 50 | 50 | 43 | 43 |
| Rubber-like Polymer (c) | Parts by Weight | - | - | - | - | 14 | 14 |
| Unsaturated Polar Compound (G) | Parts by Weight | - | - | Epoxy PB 2.0 | Epoxy PB 2.0 | Mal. ah. 0.5 | Mal. ah. 0.5 |
| Thioether Compound (E) | Parts by Weight | (E5) 1.0 | (E5) 1.5 | (E5) 1.0 | (E5) 1.5 | (E5) 1.0 | (E5) 1.5 |
| Temperature of Injection Cylinder | °C | 270 | 320 | 270 | 320 | 270 | 320 |
| Residence Time in Injection Cylinder | Min. | 3 | 10 | 3 | 10 | 3 | 10 |
| Izot Impact Value | Kg·cm/cm | 3.8 | 3.5 | 7.2 | 6.9 | 30 | 28 |
| Appearance | - | A | A | A | A | A | A |

[Notes] Unsaturated Polar Compound (G): Unsaturated carbon-carbon group and polar group-containing compound

Epoxy PB: Epoxydated liquid polybutadiene having a molecular weight of ca. 1,000 and containing ca. 7.5 mol% of epoxy groups

Mal. ah.: Maleic anhydride

Thioether Compound (E5): Pentaerythritol-tetrakis(β-lauryl thiopropionate):

$$(C_{12}H_{25}SC_2H_4\overset{\overset{O}{\|}}{C}OCH_2 \rightarrow_4 C$$

Table 1 (continued)

| Items | Unit | Example 7 | Example 8 | Comparative Example 1 | Comparative Example 2 | Comparative Example 3 | Comparative Example 4 |
|---|---|---|---|---|---|---|---|
| Polyphenylene Ether Resin (a) | Parts by Weight | 43 | 43 | 50 | 50 | 43 | 43 |
| Polyamide Resin (b) | Parts by Weight | 43 | 43 | 50 | 50 | 43 | 43 |
| Rubber-like Polymer (c) | Parts by Weight | 14 | 14 | - | - | 14 | 14 |
| Unsaturated Polar Compound (G) | Parts by Weight | Mal. ah. 0.5 | Mal. ah. 0.5 | - - | Epoxy PB 2.0 | Mal. ah. 0.5 | Mal. ah. 0.5 |
| Thioether Compound (E) | Parts by Weight | (E5) 3 | (E5) 0.4 | - - | - - | - - | - - |
| Temperature of Injection Cylinder | °C | 320 | 310 | 320 | 320 | 270 | 320 |
| Residence Time in Injection Cylinder | Min. | 10 | 10 | 10 | 10 | 3 | 10 |
| Izod Impact Value | Kg·cm/cm | 29 | 27 | 0.8 | 1.2 | 30 | 1.8 |
| Appearance | - | A | A | C | C | A | C |

Table 2

| Items | Unit | Example 9 | Example 10 |
|---|---|---|---|
| Polyphenylene Ether Resin (a) | Parts by Weight | 43 | 43 |
| Polyamide Resin (b) | Parts by Weight | 43 | 43 |
| Rubber-like Polymer (c) | Parts by Weight | 14 | 14 |
| Unsaturated Polar Compound (G) | Parts by Weight | Mal. ah. 0.5 | Mal. ah. 0.5 |
| Thioether Compound (E) | Parts by Weight | (E28) 1.5 | (E27) 1.5 |
| Temperature of Injection Cylinder | °C | 320 | 320 |
| Residence Time in Injection Cylinder | Min. | 10 | 10 |
| Izot Impact Value | Kg·cm/cm | 27 | 28 |
| Appearance | - | A | A |

[Notes] Unsaturated Polar Compound (G): Unsaturated carbon-carbon group and polar group-containing compound

Mal. ah.: Maleic anhydride

Thioether Compound (E28): Distearyl-3,3'-thiodipropionate:

$$(C_{18}H_{37}O\overset{\overset{O}{\|}}{C}-CH_2CH_2)_2S$$

(E27): Dimyristyl-3,3'-thiodipropionate:

$$(C_{14}H_{29}O\overset{\overset{O}{\|}}{C}-CH_2CH_2)_2S$$

Table 3

| Items | Unit | Example 11 | Example 12 | Example 13 | Example 14 | Example 15 | Comparative Example 5 | Comparative Example 6 |
|---|---|---|---|---|---|---|---|---|
| Polyphenylene Ether Resin (a) | Parts by Weight | 50 | 43 | 43 | 43 | 43 | 50 | 43 |
| Polyamide Resin (b) | Parts by Weight | 50 | 43 | 43 | 43 | 43 | 50 | 43 |
| Rubber-like Polymer (c) | Parts by Weight | - | 14 | 14 | 14 | 14 | - | 14 |
| Unsaturated Polar Compound (G) | Parts by Weight | - - | Mal. ah. 0.5 | Mal. ah. 0.5 | Mal. ah. 0.5 | Mal. ah. 0.5 | - | Mal. ah. 0.5 |
| Highly Sterically Hindered Phenol Compound (F) | Parts by Weight | (F5) 0.5 | (F1) 0.5 | (F5) 0.5 | (F8) 0.5 | (F4) 0.5 | - - | - - |
| Thioether Compound (E) | Parts by Weight | (E5) 0.5 | (E28) 1.0 | (E5) 0.5 | (E5) 0.5 | (E5) 1.0 | - - | - - |
| Temperature of Injection Cylinder | °C | 320 | 320 | 320 | 320 | 320 | 320 | 320 |
| Residence Time in Injection Cylinder | Min. | 10 | 10 | 10 | 10 | 10 | 10 | 10 |
| Izot Impact Value | Kg·cm/cm | 3.0 | 28 | 29 | 28 | 27 | 0.9 | 2.2 |
| Appearance | - | A | A | A | A | A | C | C |

[Notes]

| | |
|---|---|
| Unsaturated Polar Compound (G): | Unsaturated carbon-carbon group and polar group-containing Compound |
| Mal. ah.: | Maleic anhydride |
| Highly Sterically Hindered Phenol Compound (F1): | Tetrakis[methylene-3-(3,5-di-t-butyl-4-hydroxyphenyl)propionate]methane |
| (F5): | 2,4-bis(octylthio)-6-(4-hydroxy-3,5-di-t-butylanilino)-1,3,5-triazine |
| (F8): | 2,2'-methylenebis(4-methyl-6-t-butylphenol) |
| (F4): | 1,3,5-trimethyl-2,4,6-tris(3,5-di-t-butyl-4-hydroxybenzyl)benzene |
| Thioether Compound (E5): | Pentaerythritol tetrakis(β-lauryl thiopropionate): |
| | $(C_{12}H_{25}SC_2H_4\overset{O}{\overset{\|}{C}}OCH_2\text{)}_4C$ |
| (E28): | Distearyl-3,3'-thiodipropionate: |
| | $(C_{18}H_{37}O\overset{O}{\overset{\|}{C}}-CH_2CH_2\text{)}_2S$ |

It is apparent from the tables that the resin compositions containing thioether compound (E) exhibit molding stability superior to those of the resin compositions containing no thioether compounds. These results clearly show the advantages of the present invention.

**Claims**

1. A resin composition which comprises:
a resin (D) consisting of at least a polyphenylene ether resin (a) and a polyamide resin (b), and a thioether compound (E) which is present in an amount of from 0.01 to 5 parts by weight, per 100 parts by weight of said resin (D).

2. A resin composition as claimed in Claim 1, which contains, by weight 70 to 10 parts of the polyphenylene ether resin (a) and 30 to 90 parts of the polyamide resin (b) per 100 parts of the total of said polyphenylene ether resin (a) and said polyamide resin (b).

3. A resin composition as claimed in Claim 1 or 2, wherein the resin (D) also contains a rubber-like polymer (c).

4. A resin composition as claimed in Claim 3, wherein the rubber-like polymer (c) is present in an amount of from 3 to 50% by weight, based on the total weight of said resins (a) and resin (b) and the polymer (c).

5. A resin composition as claimed in any preceding claim, wherein said thioether compound (E) is present by weight in an amount of from 0.05 to 3 parts per 100 parts of said resin (D).

6. A resin composition as claimed in any preceding claim, which also contains (G) a compound having an unsaturated carbon-carbon group and a polar group which compound (G) is present in an amount of from 0.01 to 30 parts by weight, per 100 parts by weight of said resin (D).

7. A resin composition as claimed in Claim 6, wherein said compound (G) is present in an amount of from 0.05 to 15 parts by weight, per 100 parts by weight of said resin (D).

8. A resin composition as claimed in Claim 6 or 7, wherein said compound (G) is maleic acid or maleic anhydride.

9. A resin composition as claimed in any preceding claim, which also contains (F) a highly sterically hindered phenol compound, in an amount of from 0.01 to 5 parts by weight, per 100 parts by weight of said resin (D).

10. A resin composition as claimed in Claim 9, wherein the total amount by weight of said thioether compound (E) and said compound (F) is up to 5 parts per 100 parts of said resin (D).

European Patent Office

# EUROPEAN SEARCH REPORT

Application number

EP 87 30 3766

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 054 623 (SUMITOMO)<br>& US-A-4 338 421 (Cat. D)<br>--- | | C 08 L 77/00<br>C 08 L 71/04<br>C 08 K 5/37 |
| A | EP-A-0 024 120 (SUMITOMO)<br>& US-A-4 315 086 (Cat. D)<br>--- | | |
| A | EP-A-0 029 797 (GOODYEAR)<br>--- | | |
| A | EP-A-0 146 168 (AGIP)<br>--- | | |
| A | FR-A-2 162 926 (DEXTER)<br>----- | | TECHNICAL FIELDS SEARCHED (Int. Cl.4)<br>C 08 L<br>C 08 K |

The present search report has been drawn up for all claims

| Place of search | Date of completion of the search | Examiner |
|---|---|---|
| THE HAGUE | 07-09-1987 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82